(19) Europäisches Patentamt / European Patent Office / Office européen des brevets

(11) **EP 3 065 132 A1**

(12) **DEMANDE DE BREVET EUROPEEN**

(43) Date de publication:
**07.09.2016 Bulletin 2016/36**

(51) Int Cl.:
***G10L 15/22*** *(2006.01)*

(21) Numéro de dépôt: **15157920.8**

(22) Date de dépôt: **06.03.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(71) Demandeur: **ZETES Industries S.A.
1130 Bruxelles (BE)**

(72) Inventeur: **Forster, Jean-Luc
1380 LASNE (BE)**

(74) Mandataire: **De Groote, Christophe et al
Abyoo sprl
Centre Monnet
Avenue Jean Monnet, 1
1348 Louvain-la-Neuve (BE)**

(54) **Méthode et système de détermination de validité d'un élément d'un résultat de reconnaissance vocale**

(57) Méthode de détermination de validité d'un élément (113) d'un résultat (100) de reconnaissance vocale comprenant les étapes suivantes : fournir une valeur d'un paramètre de reconnaissance vocale, qui est prédéterminée pour l'orateur (40) et pour un élément (113) identique audit élément (113) dudit résultat (100) dont la validité est recherchée ; obtenir à partir dudit résultat (100) une valeur du même paramètre de reconnaissance vocale pour ledit élément (113) dont la validité est recherchée ; déterminer que ledit élément (113) dudit résultat (100) est valide si la valeur du paramètre de reconnaissance vocale obtenue à partir dudit résultat (100) est identique, dans un intervalle près, à la valeur prédéterminée pour ledit orateur (40) pour cet élément (113).

Fig. 1

**Description**

**Domaine de l'invention**

L'invention se rapporte au domaine de la reconnaissance vocale. En particulier et selon un premier aspect, l'invention se rapporte à une méthode de détermination de validité d'un élément (mot par exemple) d'un résultat de reconnaissance vocale. Selon un deuxième aspect, l'invention se rapporte à un système (ou dispositif). Selon un troisième aspect, l'invention se rapporte à un programme. Selon un quatrième aspect, l'invention se rapporte à un support de stockage comprenant des instructions (par exemple : clé usb, disque de type CD-ROM ou DVD).

**État de la technique**

Un moteur de reconnaissance vocale permet de fournir, à partir d'un message parlé ou audio un résultat qui est généralement sous forme d'un texte ou d'un code exploitable par une machine. Un tel résultat est par exemple une hypothèse fournie par le moteur de reconnaissance vocale. La reconnaissance vocale est maintenant largement répandue et est jugée très utile. Différentes utilisations de la reconnaissance vocale sont notamment enseignées dans US6,754,629B1.

Des méthodes existent pour améliorer les hypothèses fournies par un moteur de reconnaissance vocale. Par exemple, US2014/0278418A1 propose d'utiliser l'identité d'un orateur pour adapter des algorithmes de reconnaissance vocale à des spécificités de prononciation dudit orateur. Cette adaptation se fait au sein même du moteur de reconnaissance vocale, par exemple en modifiant son dictionnaire phonétique pour tenir compte de la façon dont parle l'orateur ou utilisateur.

Un résultat de reconnaissance vocale comprend généralement une suite d'éléments, par exemple des mots, séparés par des silences ou par des intervalles de temps ne comprenant pas de mots reconnus par le moteur de reconnaissance vocale. Un tel résultat est caractérisé par un début et une fin et ses éléments sont temporellement arrangés entre ce début et cette fin.

Un résultat de reconnaissance vocale peut être utilisé par exemple pour entrer une information dans un système informatique, par exemple un numéro d'article ou une instruction quelconque à réaliser. Plutôt que d'utiliser un résultat brut, on applique parfois une ou plusieurs opérations de post-traitement au résultat pour y extraire une solution post-traitée. Par exemple, il est possible de parcourir un résultat issu d'un moteur de reconnaissance vocale du début vers la fin et de retenir, par exemple, les cinq premiers éléments considérés comme valides, s'il est connu que l'information utile ne comprend pas plus de cinq éléments (un élément est par exemple un mot). En effet, sachant que l'information utile (un code par exemple) ne comprend pas plus de cinq mots ou cinq chiffres, on décide alors parfois de ne retenir que les cinq premiers éléments valides d'un résultat issu d'un moteur de reconnaissance vocale.

Une des difficultés est de déterminer quels éléments du résultat de reconnaissance vocale sont valides et quels éléments sont invalides. Il se peut en effet qu'un moteur de reconnaissance vocale fournisse un élément 'deux', alors que l'utilisateur a dit en fait 'euh'. Il est important de pouvoir déterminer que l'élément 'deux' fourni par le moteur de reconnaissance vocale est invalide dans ce cas.

Un moteur de reconnaissance vocale peut fournir en général un taux de confiance associé à chaque élément (chaque mot par exemple) du résultat. Une manière de déterminer la validité d'un élément est de le considérer valide si le taux de confiance qui lui est associé est supérieur ou égal à une valeur seuil donnée, par exemple dans ce cas-ci au-dessus d'un taux de confiance donné (par exemple 6000 si le taux de confiance peut varier entre 0 et 10 000). Les inventeurs ont trouvé qu'une telle manière de procéder n'était pas satisfaisante : certains éléments valides sont rejetés et d'autres éléments invalides sont gardés. Une telle façon de procéder n'est donc pas assez fiable.

**Résumé de l'invention**

Selon un premier aspect, un des buts de l'invention est de fournir une méthode de détermination de validité d'un élément d'un résultat de reconnaissance vocale qui soit plus fiable. A cette fin, les inventeurs proposent la méthode suivante. Méthode de détermination de validité d'un élément d'un résultat de reconnaissance vocale, ledit résultat étant généré par un algorithme de reconnaissance vocale appliqué à un message dit par un orateur, ladite méthode comprenant les étapes suivantes :

a) obtenir (ou recevoir) une valeur d'un paramètre de reconnaissance vocale, qui est prédéterminée :

- pour ledit orateur, et
- pour un élément qui est identique audit élément dudit résultat dont la validité est recherchée;

b) obtenir une valeur du même paramètre de reconnaissance vocale que celui de l'étape a) pour ledit élément dudit résultat de reconnaissance vocale dont la validité est recherchée;

c) comparer les valeurs obtenues aux étapes a) et b) pour déterminer la validité dudit élément dudit résultat de reconnaissance vocale.

Ainsi, les inventeurs ne proposent pas d'utiliser une valeur seuil commune à tous les orateurs et à tous les éléments, pour déterminer si un élément est valide ou pas. En particulier, la valeur d'un paramètre de reconnaissance vocale associé à un élément n'est pas comparée à une valeur seuil commune à tous les orateurs et à tous les éléments pour déterminer si ledit élément est valide ou pas. Les inventeurs proposent plutôt d'utiliser le profil de l'orateur lors de la détermination de validité d'un élément du résultat en post-traitement. Ainsi, une valeur d'un paramètre de reconnaissance vocale associé à un élément du résultat de reconnaissance vocal est comparée à une valeur du même paramètre de reconnaissance vocale mais prédéterminée pour ledit orateur et pour l'élément considéré. Il se peut en effet, que pour certains éléments et pour un orateur donné, les taux de confiance associés à ces éléments soient généralement faibles, alors que les éléments sont valides. Cela pourrait notamment arriver si l'accent de l'orateur est particulièrement marqué pour de tels éléments, de sorte que la prononciation de ces éléments s'éloigne alors fortement du dictionnaire phonétique du moteur de reconnaissance vocale qui fournit des taux de confiance faibles pour ces éléments. Utiliser un taux de confiance absolu, commun pour tous les orateurs et pour tous les éléments ne fournit pas de bons résultats dans ce cas. En tenant compte du profil de l'utilisateur en post-traitement, la méthode de l'invention fournit de meilleures performances pour la détermination de validité d'un élément d'un résultat de reconnaissance vocale. Elle est plus fiable. Ainsi, elle induit moins d'erreurs pour la détermination de validité ou d'invalidité d'un élément d'un résultat de reconnaissance vocale.

De préférence, plusieurs valeurs prédéterminées de plusieurs paramètres de reconnaissance vocale sont fournies à l'étape a) pour ledit orateur et pour un élément qui est identique audit élément dudit résultat dont la validité est recherchée. Par exemple, on peut fournir une valeur de durée de l'élément et une valeur d'un taux de confiance de l'élément. Dans ce cas, on peut aussi obtenir plusieurs valeurs des mêmes paramètres de reconnaissance vocale à l'étape b) pour l'élément dont la validité est recherchée. Et finalement, on peut, dans ces cas, comparer les valeurs des différents paramètres de reconnaissance vocale à l'étape c) pour déterminer si l'élément est valide ou pas. On peut par exemple conclure qu'un élément est valide si toutes les valeurs de l'étape b) correspondent, dans un intervalle près, aux valeurs prédéterminées de l'étape a). En général, on utilise une valeur par paramètre de reconnaissance vocale mais il pourrait être envisagé d'utiliser plusieurs valeurs par paramètre de reconnaissance vocale pour certains d'entre eux.

A l'étape b), on peut obtenir la valeur du paramètre de reconnaissance vocale de l'élément dont la validité est recherchée de plusieurs manières. De préférence, cette valeur est obtenue via le moteur de reconnaissance vocale qui fournit ledit résultat.

La méthode de l'invention ne se rapporte donc pas à l'adaptation d'un dictionnaire phonétique d'un moteur de reconnaissance vocale. La méthode de l'invention concerne plutôt le post-traitement d'un résultat de reconnaissance vocale.

La méthode de l'invention s'applique à un élément (mot par exemple) d'un résultat de reconnaissance vocale. Un résultat de reconnaissance vocale comprend en général une pluralité d'éléments. Il est possible d'appliquer la méthode à plusieurs éléments du résultat pour déterminer la validité de chacun d'entre eux. Dans ce cas, elle s'applique à chacun desdits plusieurs éléments du résultat. Généralement, un élément est un groupe de phonèmes. Un phonème est connu de l'homme du métier. De préférence, un élément est un mot. Un élément peut aussi être un groupe ou une combinaison de mots. Un exemple de combinaison de mots est 'annuler opération'.

La méthode de l'invention peut être utilisée dans une méthode de post-traitement de filtrage d'un résultat de reconnaissance vocale qui a pour but de sélectionner des éléments valides d'un tel résultat. Elle permet de mieux rejeter des résultats faux et du bruit.

Un résultat issu d'un moteur de reconnaissance vocale est généralement sous forme d'un texte ou d'un code exploitable par une machine. Un élément d'un résultat représente une information du résultat délimitée par deux temps différents le long d'une échelle de temps, t, associée au résultat, et qui n'est pas considérée comme un silence, ou un bruit de fond par exemple. En général, deux éléments d'un résultat de reconnaissance vocale sont séparés par un intervalle de temps pendant lequel le moteur de reconnaissance vocale ne reconnait pas d'élément (mot par exemple).

Dans le contexte de l'invention, un résultat de reconnaissance vocale peut être de différents types. Selon un premier exemple possible, un résultat de reconnaissance vocale représente une hypothèse fournie par un moteur de reconnaissance vocale à partir d'un message dit par un utilisateur ou orateur. En général, un moteur de reconnaissance vocale fournit plusieurs (par exemple trois) hypothèses à partir d'un message dit par un utilisateur. Dans ce cas, il fournit aussi en général un score (généralement exprimé en pourcents) pour chaque hypothèse.

Selon un autre exemple possible, un résultat de reconnaissance vocale est une solution, comprenant généralement une pluralité d'éléments, obtenue à partir d'une ou plusieurs opérations de post-traitement appliquée(s) à une ou plusieurs hypothèse(s) fournie(s) par un moteur de reconnaissance vocale. Dans cet autre exemple possible, le résultat est donc issu d'un module de reconnaissance vocale et issu d'un ou plusieurs module(s) de post-traitement d'une ou plusieurs hypothèse(s) fournie(s) par un moteur de reconnaissance vocale.

La méthode de l'invention a d'autres avantages. En particulier, elle est simple à mettre en oeuvre. En particulier, elle pourrait être intégrée au niveau d'un module de post-traitement d'un moteur de reconnaissance vocale.

La méthode de l'invention a également comme avantage de reposer sur un principe d'auto-apprentissage, d'auto-détermination de valeurs de paramètres de reconnaissance vocale spécifiques à un orateur donné pour différents éléments. Il est en effet possible de débuter la détermination de validité d'un élément d'un résultat de reconnaissance vocale sans utiliser la méthode de l'invention, par exemple en comparant un ou plusieurs paramètres de reconnaissance vocale associés à un élément dont la validité est recherchée à un ou plusieurs seuils prédéfinis, non spécifiques de l'orateur. Par la suite, en fonction des valeurs obtenues au cours du temps pour ledit ou lesdits paramètres de reconnaissance vocale pour différent éléments et pour différent orateurs, des valeurs spécifiques pour ces différents orateurs de ce ou ces paramètres peuvent être déterminées.

De préférence, la méthode de l'invention comprend en outre une étape préliminaire de reconnaissance vocale d'un message de calibration dit par ledit orateur (le même orateur), ledit message de calibration comprenant un élément parlé identique audit élément dudit résultat de reconnaissance vocale dont la validité est recherchée. Selon cette variante préférée, la méthode de l'invention comprend une étape préliminaire d'enregistrement d'un message de calibration par ledit orateur. De préférence, ce message comprend une pluralité d'éléments (mots par exemple) que ledit orateur doit dire. Pour le contenu du message, on choisira de préférence un contenu comprenant des éléments que ledit orateur est censé dire plus tard, lors d'opérations de manutentions par exemple. Lors de cette étape préliminaire, on enregistre alors une ou plusieurs valeurs d'un ou plusieurs paramètres de reconnaissance vocale associés à chacun de ladite pluralité d'éléments, ces valeurs pouvant être fournies par un moteur de reconnaissance vocale devant retranscrire le message de calibration. On s'assure au préalable que les éléments du résultat de reconnaissance vocale (qui est issu du message de calibration), pour lesquels on enregistre la ou les valeurs d'un ou plusieurs paramètres de reconnaissance vocale, correspondent aux 'vrais' éléments du message de calibration dit par l'orateur. Si c'est le cas, on enregistre par exemple la durée de chacun des éléments du résultat issu du message de calibration dit par l'orateur. Selon un autre exemple, on enregistre un taux de confiance associé à chaque élément du résultat issu du message de calibration. Les valeurs de tels paramètres de reconnaissance vocale, durée et taux de confiance, peuvent être fournies par un moteur de reconnaissance vocale. Grâce à cette étape préliminaire, il est possible de fournir facilement la valeur prédéterminée du paramètre de reconnaissance vocale de l'étape a) de la méthode de l'invention.

De préférence, l'étape c) comprend l'étape c)1) suivante : si la valeur du paramètre de reconnaissance vocale obtenue à l'étape b) correspond, dans un intervalle près, à la valeur prédéterminée du paramètre de reconnaissance vocale obtenue à l'étape a), déterminer que ledit élément dudit résultat de reconnaissance vocale est valide.

De préférence, l'étape c) comprend l'étape c)2) suivante : si la valeur du paramètre de reconnaissance vocale obtenue à l'étape b) ne correspond pas, dans un intervalle près, à la valeur prédéterminée du paramètre de reconnaissance vocale obtenue à l'étape a), déterminer que ledit élément dudit résultat (100) est invalide.

De préférence, ledit intervalle près est compris entre - 20% et + 20% par rapport à la valeur prédéterminée de l'étape a). Ainsi, dans ce cas préféré, on déduira qu'un mot est valide si :

$$\text{(valeur de l'étape b))} = \text{(valeur de l'étape a)} +/-20\% \text{ de la valeur de l'étape a))}.$$

En particulier, si la valeur de l'étape a) vaut 100 ms (cas où le paramètre de reconnaissance vocale correspondant à une durée), on déduira qu'un élément est valide si sa durée est comprise entre 80 et 120 ms.

De manière encore préférée, ledit intervalle près est compris entre - 10% et + 10% par rapport à la valeur prédéterminée de l'étape a). De manière encore plus préférée, ledit intervalle près est compris entre - 5% et +5% par rapport à la valeur prédéterminée de l'étape a).

De préférence, ledit élément est un mot. Des exemples de mot sont : un, deux, voiture, parapluie. Selon cette variante préférée, la méthode de l'invention donne encore de meilleurs résultats. Chaque mot est déterminé à partir d'un message dit par un utilisateur par un moteur de reconnaissance vocale utilisant un dictionnaire. Des règles de grammaire permettent éventuellement de réduire le choix de mots possibles parmi un dictionnaire.

De préférence, ledit paramètre de reconnaissance vocale de l'étape a) est un taux de confiance. Ainsi, dans ce mode de réalisation préféré, on utilise comme paramètre de reconnaissance vocale un taux de confiance d'un élément. De préférence, il est obtenu à l'étape b) à partir du moteur de reconnaissance vocale dont est issu ledit résultat. Ce type de paramètre de reconnaissance vocale est en effet en général fourni par un moteur de reconnaissance vocale. Cette variante de la méthode de l'invention est donc particulièrement facile à mettre en oeuvre.

De préférence, ledit paramètre de reconnaissance vocale de l'étape a) est une durée. Ainsi, dans ce mode de réalisation préféré, on utilise comme paramètre de reconnaissance vocale une durée d'un élément. De préférence, il est obtenu à l'étape b) à partir du moteur de reconnaissance vocale dont est issu ledit résultat. A chaque élément d'un résultat de reconnaissance vocale correspond une durée ou intervalle temporelle. Ce type de paramètre de reconnaissance vocale est en général fourni par le moteur de reconnaissance vocale. Cette variante de la méthode de l'invention est donc particulièrement facile à mettre en oeuvre.

De préférence, on utilise deux valeurs des deux paramètres de reconnaissance vocale suivants, taux de confiance et durée, pour déterminer la validité d'un élément.

Selon une autre variante possible, ledit paramètre de reconnaissance vocale de l'étape a) est un intervalle de temps séparant un élément d'un autre directement adjacent dans un résultat de reconnaissance vocale. La valeur d'un tel paramètre de reconnaissance vocale peut être prédéterminée lors d'une étape préliminaire de calibration. De préférence, il s'agit d'un intervalle de temps séparant un élément d'un autre directement postérieure dans un résultat de reconnaissance vocale, c'est-à-dire directement adjacent vers la fin du résultat de reconnaissance vocale.

De préférence, la méthode de l'invention comprend en outre :

- une étape de fournir, pour un élément qui est identique audit élément dudit résultat et pour différents orateurs dont ledit orateur dudit message, différentes valeurs prédéterminées du même paramètre de reconnaissance vocale que celui de l'étape a), chacune desdites différentes valeurs prédéterminées étant associée à chacun desdits orateurs; et
- une étape de sélectionner parmi lesdites différentes valeurs prédéterminées dudit paramètre de reconnaissance vocale l'une d'entre elle correspondant à l'orateur dudit message, pour obtenir ladite valeur prédéterminée de l'étape a).

Grâce à ce mode de réalisation préféré, on peut utiliser facilement la méthode de l'invention pour différents orateurs. Pour ce mode de réalisation préféré, une valeur prédéterminée du paramètre de reconnaissance vocale desdites différentes valeurs prédéterminées est donc associée à un seul orateur.

De préférence, la méthode de l'invention comprend en outre :

- une étape de fournir, pour ledit orateur et pour différents éléments dont ledit élément dont la validité est recherchée, différentes valeurs prédéterminées du même paramètre de reconnaissance vocale que celui de l'étape a), chacune desdites différentes valeurs prédéterminées étant associée à chacun desdits différents éléments ; et
- une étape de sélectionner parmi lesdites différentes valeurs prédéterminées dudit paramètre de reconnaissance vocale l'une d'entre elle correspondant à un élément qui est identique audit l'élément dudit résultat de reconnaissance vocale, pour obtenir ladite valeur prédéterminée de l'étape a). Grâce à ce mode de réalisation préféré, on peut utiliser facilement la méthode de l'invention pour différents éléments (par exemple différents mots). Pour ce mode de réalisation préféré, une valeur prédéterminée du paramètre de reconnaissance vocale desdites différentes valeurs prédéterminées est donc associée à un seul élément.

De préférence, la méthode comprend en outre :

- une étape de fournir, pour différents orateurs dont ledit orateur dudit message et pour différents éléments dont ledit élément dont la validité est recherchée, différentes valeurs prédéterminées du même paramètre de reconnaissance vocale que celui de l'étape a), chacune desdites différentes valeurs prédéterminées étant associée à un seul desdits différents orateurs et à un seul desdits différents éléments ; et
- une étape de sélectionner parmi lesdites différentes valeurs prédéterminées dudit paramètre de reconnaissance vocale l'une d'entre elle correspondant à l'orateur dudit message et à un élément qui est identique audit l'élément dudit résultat de reconnaissance vocale, pour obtenir ladite valeur prédéterminée de l'étape a).

Grâce à ce mode de réalisation préféré, on peut utiliser facilement la méthode de l'invention pour différents orateurs et différents éléments (par exemple différents mots).

Selon un autre exemple, la méthode de l'invention comprend en outre une étape de déterminer une identité dudit orateur dudit message. Une identité dudit orateur peut être déterminée de différentes manières. Selon une première variante possible, elle est déterminée à partir d'une ouverture de session de l'orateur auquel on demande d'entrer son nom dans un système informatique. Selon une autre variante possible, un moteur de reconnaissance vocale dont est issu ledit résultat est apte à reconnaître l'identité dudit orateur dudit message. D'autres variantes sont possibles.

Les inventeurs proposent également une méthode de post-traitement d'un résultat de reconnaissance vocale utilisant une méthode de détermination de validation d'un élément dudit résultat telle que décrite ci-dessus. Cette méthode de post-traitement d'un résultat de reconnaissance vocale qui comprend un début, une fin et une pluralité d'éléments répartis entre ledit début et ladite fin, comprend les étapes suivantes :

i. recevoir ledit résultat ;

ii. isoler un élément de ladite pluralité d'éléments qui n'a pas subi le test de validation de l'étape iii.a. ;

iii. ensuite,

    a. si un élément a été isolé à l'étape ii., déterminer s'il est valide en utilisant un test de validation,

    b. sinon, passer directement à l'étape v. ;

iv. répéter les étapes ii. et iii. (dans l'ordre suivant : étape ii. puis étape iii.);

v. si au moins un élément a été déterminé valide à l'étape iii.a, déterminer une solution post-traitée en utilisant (ou reprenant) au moins un élément déterminé valide à l'étape iii.a.

Cette méthode de post-traitement est caractérisée en ce que ledit test de validation de l'étape iii.a., pour déterminer si l'élément isolé à l'étape ii. est valide, comprend une méthode de détermination de validité d'un élément d'un résultat telle que décrite précédemment.

Cette méthode de post-traitement est particulièrement efficace et fiable grâce aux avantages procurés par la méthode de détermination de validité d'un élément du résultat.

Si aucun élément n'a été déterminé valide à l'étape iii.a, l'étape v comprend de préférence la sous-étape suivante : déterminer une solution post-traitée qui ne comprend pas d'élément dudit résultat. Dans cette variante préférée et quand aucun élément n'a été déterminé valide à l'étape iii.a, différents exemples de solution post-traitée sont : message vide c'est-à-dire ne comprenant aucun élément (aucun mot par exemple), message mentionnant que le post-traitement a été infructueux, résultat fourni par moteur de reconnaissance vocale (pas de filtrage du résultat dans ce cas).

De préférence, chaque élément isolé à l'étape ii. est choisi de ladite fin du résultat audit début du résultat de manière consécutive.

De manière consécutive veut dire sans passer un élément. Ainsi, on considère les différents éléments dans un ordre chronologique décroissant sans passer d'éléments. Un résultat de reconnaissance vocale est donc parcouru de la fin vers le début avec cette variante préférée. Les inventeurs ont en effet découvert qu'une personne dictant un message à un moteur de reconnaissance vocale avait plus tendance à hésiter et/ou à se tromper au début qu'à la fin. En traitant un résultat de reconnaissance vocale depuis la fin plutôt que depuis le début, la méthode de post-traitement de cette variante préférée privilégie la partie du résultat qui a le plus de chances d'avoir la bonne information. Au final, cette méthode est donc plus fiable.

Prenons l'exemple suivant. Imaginons qu'un code à lire est : 4531. L'opérateur, en le lisant, dit : « 5, 4, euh, 4, 5, 3, 1 » et un moteur de reconnaissance vocale fournit le résultat suivant : « 5, 4, 2, 4, 5, 3, 1 ») sous forme de texte à un système de post-traitement. Faisons l'hypothèse que ce système de post-traitement (qui peut être intégré dans un moteur de reconnaissance vocale) sache que le code ne doit pas avoir plus de quatre bons éléments (chiffres dans ce cas-ci). Une méthode de post-traitement qui parcourt le résultat du début vers la fin du résultat fournira comme solution post-traitée : 5424 (et non 4531). La méthode de post-traitement de l'invention fournira 4531, c'est-à-dire la bonne solution.

Les inventeurs ont remarqué que la situation illustrée par cet exemple, c'est-à-dire le fait qu'un opérateur a plus tendance à hésiter ou se tromper en début qu'en fin de séquence enregistrée, est plus fréquente que l'inverse. Ainsi, globalement, la méthode de post-traitement selon cette variante préférée est plus fiable car elle fournit moins de mauvais résultats. Les chances d'obtenir une solution post-traitée correcte sont aussi plus élevées. La méthode de post-traitement selon cette variante préférée est donc aussi plus efficace.

La méthode de post-traitement de l'invention a d'autres avantages. Elle est facile à mettre en oeuvre. En particulier, elle ne demande pas beaucoup d'étapes d'implémentation. Les étapes d'implémentation sont en outre simples. Ces aspects facilitent son intégration, par exemple au niveau d'un système informatique utilisant un résultat de reconnaissance vocale, ou au niveau d'un moteur de reconnaissance vocale par exemple.

La méthode de post-traitement d'un résultat de reconnaissance vocale peut être vue comme une méthode de filtrage d'un résultat de reconnaissance vocale : en effet, les éléments non valides ne sont pas utilisés pour déterminer la solution post-traitée.

De préférence, l'étape iii.a. comprend en outre une instruction de passer directement à l'étape vi. si l'élément subissant le test de validation de l'étape iii.a n'est pas déterminé comme valide. Selon cette variante préférée, une solution post-traitée pour laquelle au moins un élément a été sélectionné à l'étape iv. ne comprend que des éléments valides consécutifs du résultat du moteur de reconnaissance vocale. La fiabilité de la méthode est alors encore améliorée car on ne garde qu'une série d'éléments valides consécutifs

De préférence, la méthode de post-traitement comprenant l'étape suivante : vi. déterminer si ladite solution post-traitée de l'étape v. satisfait une règle de grammaire.

En utilisant une règle de grammaire, on peut encore augmenter la fiabilité de la méthode de l'invention. On peut notamment mieux filtrer un résultat aberrant. Un exemple de règle de grammaire est un intervalle de nombres de mots admis pour la solution post-traitée. Par exemple, on pourrait définir comme règle de grammaire : la solution post-traitée doit contenir entre trois et six mots. De préférence, quand une règle de grammaire est utilisée, la méthode de l'invention comprend en outre l'étape suivante :

vii.

    a. si la réponse au test de l'étape vi. est positive, fournir ladite solution post-traitée,
    b. sinon, fournir ledit résultat de reconnaissance vocale.

Selon une autre variante possible, la méthode de l'invention comprend l'étape suivante quand une règle de grammaire est utilisée :

vii.

    a. si la réponse au test de l'étape vi. est positive (c'est-à-dire : la solution post-traitée satisfait la règle de grammaire), fournir ladite solution post-traitée,
    b. si la réponse au test de l'étape vi. est négative (c'est-à-dire : la solution post-traitée ne satisfait pas la règle de grammaire), ne pas fournir de solution post-traitée, ou fournir un message vide, ou fournir un message mentionnant qu'aucune solution post-traitée satisfaisante n'a pu être déterminée.

Outre le fait que le test de validation de l'étape iii.a comprenne une méthode de détermination de validité d'un élément telle que décrite pour le premier aspect de l'invention, ce test de validation peut comprendre une ou plusieurs autres étapes. Selon un premier exemple possible, ledit test de validation de l'étape iii.a. comprend également une étape de considérer un élément valide si sa durée est supérieure ou égale à un seuil de durée inférieur.
A chaque élément du résultat correspond une durée ou intervalle temporel qui est en général fourni par le moteur de reconnaissance vocale. Avec ce mode de réalisation préféré, il est possible de s'affranchir plus efficacement des éléments qui sont de courte durée, comme par exemple un bruit parasite qui peut être issu d'une machine.
Selon un autre exemple possible, ledit test de validation de l'étape iii.a. comprend une étape de considérer un élément valide si sa durée est inférieure ou égale à un seuil de durée supérieur.
Avec ce mode de réalisation préféré, il est possible de s'affranchir plus efficacement des éléments qui sont de longue durée, comme par exemple une hésitation d'un orateur qui dit par exemple 'euh'. En utilisant ce mode de réalisation préféré, on pourra plus facilement éliminer 'euh' et ainsi éviter de le confondre avec 'deux'.
Selon un autre exemple possible, ledit test de validation de l'étape iii.a. comprend une étape de considérer un élément valide si son taux de confiance est supérieur ou égal à un taux de confiance minimal.
La fiabilité de la méthode de post-traitement est encore accrue dans ce cas-là.
Selon un autre exemple possible, ledit test de validation de l'étape iii.a. comprend une étape de considérer un élément valide si un intervalle temporel le séparant d'un autre élément directement adjacent vers ladite fin du résultat est supérieur ou égal à un intervalle de temps minimum.
Grâce à cette variante préférée, il est possible de rejeter plus efficacement des éléments qui ne sont pas générés par un être humain mais plutôt par une machine par exemple et qui sont temporellement très rapprochés.
Selon un autre exemple possible, ledit test de validation de l'étape iii.a. comprend une étape de considérer un élément valide si un intervalle temporel le séparant d'un autre élément directement adjacent vers ladite fin du résultat est inférieur ou égal à un intervalle de temps maximum.
Grâce à cette variante, il est possible de rejeter plus efficacement des éléments qui sont temporellement grandement séparés l'un de l'autre.
De préférence, tous les éléments déterminés valides à l'étape iii.a sont repris pour déterminer ladite solution post-traitée à l'étape v.
Les inventeurs proposent aussi une méthode pour générer une solution optimisée en reconnaissance vocale et comprenant les étapes suivantes :

- recevoir une pluralité de résultats de reconnaissance vocale, chacun comprenant un ou plusieurs éléments ;
- sélectionner un ou plusieurs éléments valides d'un ou plusieurs résultats de ladite pluralité de résultats, lesdits un ou plusieurs éléments étant déterminés valides grâce à l'une quelconque des méthodes préférées du premier aspect de l'invention ;
- générer ladite solution optimisée à partir de l'au moins un élément valide sélectionné à l'étape précédente.

Selon un deuxième aspect, l'invention se rapporte à un système (ou dispositif) de détermination de validité d'un élément d'un résultat de reconnaissance vocale, ledit résultat étant issu d'un algorithme de reconnaissance vocale appliqué à un message dit par un orateur, ledit dispositif comprenant:

- des moyens d'acquisition pour recevoir une valeur d'un paramètre de reconnaissance vocale, qui est prédéterminée pour ledit orateur et pour un élément qui est identique audit élément dudit résultat de reconnaissance vocale dont la validité est recherchée ;
- des moyens d'acquisition pour recevoir une valeur du même paramètre de reconnaissance vocale pour l'élément dudit résultat de reconnaissance vocale dont la validité est recherchée ;
- des moyens de traitement pour comparer les valeurs reçues par les moyens d'acquisition pour déterminer la validité dudit élément dudit résultat de reconnaissance vocale

Les avantages associés à la méthode selon le premier aspect de l'invention, s'appliquent au système de l'invention, mutatis mutandis. Ainsi, en particulier, il est possible déterminer la validité d'un élément d'un résultat de reconnaissance vocale de manière plus fiable et plus efficace avec le système de l'invention. Les différents modes de réalisation présentés pour la méthode selon le premier aspect de l'invention, s'appliquent au système de l'invention, mutatis mutandis.

Selon un troisième aspect, l'invention se rapporte à un programme (de préférence un programme d'ordinateur) pour permettre de déterminer la validité d'un élément d'un résultat de reconnaissance vocale, ledit résultat étant issu d'un algorithme de reconnaissance vocale appliqué à un message dit par un orateur, ledit programme comprenant un code pour permettre à un dispositif d'effectuer les étapes suivantes :

a) lire une valeur d'un (ou plusieurs) paramètres de reconnaissance vocale qui est prédéterminée pour ledit orateur et pour un élément qui est identique audit élément dudit résultat de reconnaissance vocale;
b) lire une (ou plusieurs) valeurs du même paramètre de reconnaissance vocale que celui de l'étape a) pour ledit élément dudit résultat de reconnaissance vocale;
c) comparer les valeurs obtenues aux étapes a) et b) pour déterminer la validité dudit élément dudit résultat de reconnaissance vocale.

De préférence, ledit dispositif est un moteur de reconnaissance vocale ou un ordinateur pouvant communiquer avec un moteur de reconnaissance vocale.

Les avantages associés à la méthode et au système selon les premier et deuxième aspects de l'invention, s'appliquent au programme de l'invention, mutatis mutandis. Ainsi, en particulier, il est possible de déterminer la validité d'un élément d'un résultat de reconnaissance vocale de manière plus efficace et plus fiable avec le programme de l'invention. Les différents modes de réalisation présentés pour la méthode selon le premier aspect de l'invention, s'appliquent au programme de l'invention, mutatis mutandis.

Selon un quatrième aspect, l'invention se rapporte à un support de stockage pouvant être connecté à un dispositif et comprenant des instructions, qui lues, permettent audit dispositif de déterminer la validité d'un élément d'un résultat de reconnaissance vocale, ledit résultat étant issu d'un algorithme de reconnaissance vocale appliqué à un message dit par un orateur, lesdites instructions permettant d'imposer audit dispositif d'effectuer les étapes suivantes :

a) lire une valeur d'un (ou plusieurs) paramètre de reconnaissance vocale qui est prédéterminée pour ledit orateur et pour un élément qui est identique audit élément dudit résultat de reconnaissance vocale;
b) lire une (ou plusieurs) valeur du même paramètre de reconnaissance vocale que celui de l'étape a) pour ledit élément dudit résultat;
c) comparer les valeurs obtenues aux étapes a) et b) pour déterminer la validité dudit élément dudit résultat de reconnaissance vocale.

De préférence, ledit dispositif est un moteur de reconnaissance vocale ou un ordinateur pouvant communiquer avec un moteur de reconnaissance vocale.

Les avantages associés à la méthode selon le premier aspect de l'invention, s'appliquent au support de stockage de l'invention, mutatis mutandis. Ainsi, en particulier, il est possible de déterminer la validité d'un élément d'un résultat de reconnaissance vocale de manière plus efficace et plus fiable avec le support de stockage de l'invention. Les différents modes de réalisation présentés pour la méthode selon le premier aspect de l'invention, s'appliquent au support de stockage de l'invention, mutatis mutandis.

**Brève description des figures**

Ces aspects ainsi que d'autres aspects de l'invention seront clarifiés dans la description détaillée de modes de réalisation particuliers de l'invention, référence étant faite aux dessins des figures, dans lesquelles :

la Fig.1    montre schématiquement un orateur disant une message qui est traité par un moteur de reconnaissance vocale ;

la Fig.2    montre schématiquement un exemple de résultat issu d'un moteur de reconnaissance vocale;

la Fig.3    montre schématiquement une version préférée d'une méthode de post-traitement d'un résultat de reconnaissance vocale;

la Fig.4    montre schématiquement un exemple de système selon l'invention.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

**Description détaillée de modes de réalisation particuliers**

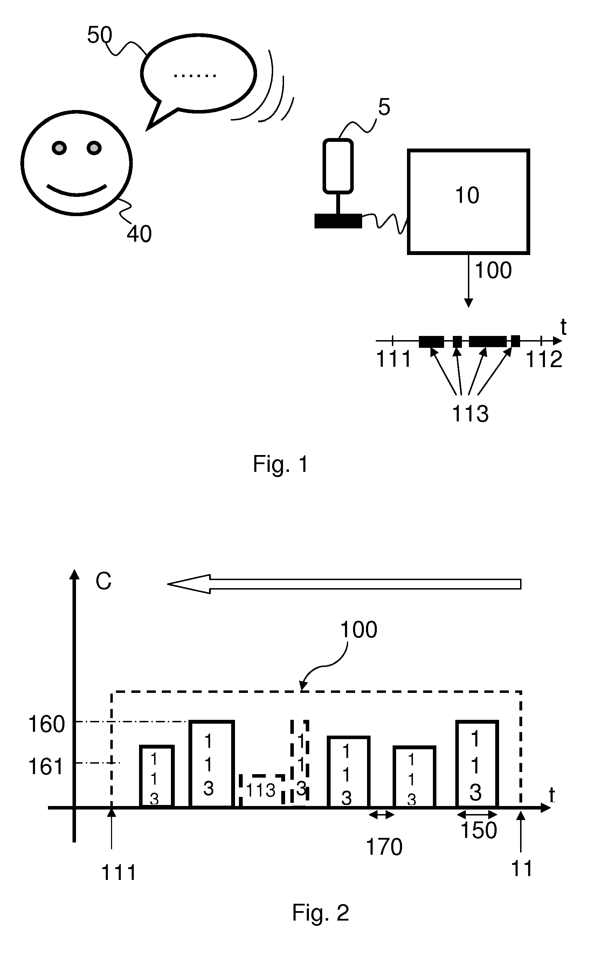

La figure 1 montre un orateur 40 (ou utilisateur 40) disant un message 50 vers un micro 5. Ce message 50 est ensuite transféré vers un moteur de reconnaissance vocale 10 qui est connu d'un homme du métier. Différents modèles et différentes marques sont disponibles sur le marché. En général, le micro 5 fait partie du moteur de reconnaissance vocale 10. Ce dernier traite le message 50 avec des algorithmes de reconnaissance vocale, basés par exemple sur un modèle de Markov caché (MMC). Il en résultat un résultat 100 issu du moteur de reconnaissance vocale 10. Un exemple de résultat 100 est une hypothèse générée par le moteur de reconnaissance vocale 10. Un autre exemple de résultat 100 est une solution obtenue à partir des algorithmes de reconnaissance vocale et à partir d'opérations de post-traitement qui sont par exemple appliquées à une ou plusieurs hypothèses générées par le moteur de reconnaissance vocale 10. Des modules de post-traitement pour fournir une telle solution peuvent faire partie du moteur de reconnaissance vocale 10. Le résultat 100 est généralement sous la forme d'un texte qui peut être déchiffré par une machine, un ordinateur ou une unité de traitement par exemple. Le résultat 100 est caractérisé par un début 111 et une fin 112. Le début 111 est antérieur à ladite fin 112 le long d'une échelle de temps, t. Le résultat 100 comprend généralement une pluralité d'éléments 113 temporellement répartis entre le début 111 et la fin 112. Un élément 113 représente une information comprise entre deux temps différents le long de l'échelle de temps, t. En général, un élément 113 est une portion du résultat 100 qui n'est pas considérée comme un silence et/ou un bruit de fond. Un exemple d'élément 113 est un mot. En général, les différents éléments 113 sont séparés par des portions du résultat 100 représentant un silence, un bruit de fond, ou un intervalle de temps pendant lequel aucun élément 113 (mot par exemple) n'est reconnu par le moteur de reconnaissance vocale 10.

Le message 50 comprend un certains nombre d'éléments parlés, par exemple des mots parlés tels que : un, deux, voiture, parapluie. Un résultat 100 de reconnaissance vocale comprend un certain nombre d'éléments 113 (ou mots). Ces éléments 113 sont transcrits, par un moteur de reconnaissance vocale 10 à partir du message 50 comprenant les éléments parlés, généralement dans un format lisible par un humain ou un ordinateur par exemple. Si le message 50 comprend les éléments parlés suivants : un, deux, voiture, parapluie, le résultat 100 de reconnaissance vocale comprend idéalement les éléments 113 suivants : un, deux, voiture, parapluie.

La figure 2 montre un exemple de résultat 100 de reconnaissance vocale. Entre son début 111 et sa fin 112, le résultat 100 comprend plusieurs éléments 113, sept dans le cas illustré à la figure 2. Sur cette figure, les éléments 113 sont représentés en fonction du temps, t (abscisse). L'ordonnée, C, représente un niveau ou taux de confiance. Cette notion est connue d'un homme du métier. Il s'agit d'une propriété ou statistique généralement associée à chaque élément 113 et qui peut être fournie par un moteur de reconnaissance vocale 10 en général. Un taux de confiance représente, en général, une probabilité qu'un élément d'un résultat de reconnaissance vocale 100 à partir d'un élément parlé, est le bon. Un taux de confiance est connu de l'homme du métier. Un exemple de moteur de reconnaissance vocale 10 est le modèle VoCon® 3200 V3.14 de Nuance. Dans ce cas, le taux de confiance varie entre 0 et 10 000. Une valeur de 0 se rapporte à une valeur minimale d'un taux de confiance (très faible probabilité que l'élément du résultat de reconnaissance vocale soit le bon) et 10 0000 représente une valeur maximale d'un taux de confiance (très grande probabilité que l'élément du résultat de reconnaissance vocale soit le bon). En fonction de la hauteur d'un élément 113 sur la figure 2, son taux de confiance 160 est plus ou moins élevé.

Plutôt que de déterminer la validité d'un élément 113 de manière absolue, les inventeurs proposent d'utiliser le profil de l'orateur 40 ayant dit le message 50 dont est issu le résultat 100. Dans l'exemple de la figure 2, certains éléments 113 pourraient être considérés comme non valides en prenant des critères absolus, communs à tous les orateurs 40. Par exemple, le troisième élément 113 en commençant du début 111 pourrait être déterminé invalide car ayant un taux de confiance inférieur à un taux de confiance minimal 161. Le quatrième élément 113 pourrait être lui considéré comme invalide car ayant une durée inférieure à un seuil de durée inférieur. Même si de tels critères absolus peuvent être utilisés en combinaison avec la méthode de l'invention, les inventeurs proposent de comparer la valeur d'un (ou plusieurs) paramètres de reconnaissance vocale d'un élément 113 du résultat 100 à une valeur du même (ou des mêmes) paramètre(s) de reconnaissance vocale qui est prédéterminée pour le même élément 113 et pour le même orateur 40.

Par exemple, imaginons que l'orateur 40 soit Monsieur X et qu'il dise un message 50 comprenant entre autre comme élément parlé le mot 'deux'. Faisons l'hypothèse qu'un moteur de reconnaissance vocale 10 fournisse un résultat 100 issu de ce message 50, comprenant un élément 113 'deux'. La méthode de l'invention nécessite d'obtenir une valeur prédéterminée d'une statistique (par exemple la durée, le taux de confiance), de l'élément 'deux' pour Monsieur X. Une telle valeur prédéterminée peut être obtenue grâce à une étape préliminaire par exemple, lors de laquelle le même orateur 40 a dit un message 50 de calibration à un moteur de reconnaissance vocale 10, ledit message 50 de calibration comprenant le mot parlé 'deux'. Grâce au résultat 100 de ce message 50 de calibration fourni par le moteur de reconnaissance vocale 10, il est possible de déduire une (ou plusieurs) valeur(s) d'un (ou plusieurs) paramètre(s) de reconnaissance vocale associé(s) au mot 'deux'. Les inventeurs proposent de comparer cette (ou ces) valeur(s) prédéterminée(s) de ce ou ces paramètre(s) de reconnaissance vocale à une (ou plusieurs) valeur(s) du (ou des) même(s) paramètre(s) de reconnaissance vocale pour ce mot 'deux'. Si la (ou les) valeur(s) sont proche(s), on peut conclure que le mot 'deux' du résultat 100 de reconnaissance vocale est valide. Cela n'empêche pas, selon certaines variantes de l'invention, d'utiliser en combinaison certains critères absolus, communs à tous les éléments 113 et/ou à tous les orateurs 40, pour déterminer qu'un élément 113 du résultat 100 de reconnaissance vocale est valide ou pas. Ainsi, on peut par exemple rejeter tout élément 113 du résultat 100 qui a durée supérieure à deux secondes.

De préférence, la méthode de l'invention comprend une étape de fournir, pour différents orateurs 40 et pour différents éléments 113, différentes valeurs prédéterminées d'un ou plusieurs paramètres de reconnaissance vocale. De préférence, chacune de ces valeurs prédéterminées correspond alors à un seul élément 113 et à un seul orateur 40. Il s'agit alors de sélectionner une valeur prédéterminée d'un paramètre de reconnaissance vocale pour déterminer la validité d'un élément 113 d'un résultat 100 issu d'un message 50 dit par un orateur 40. Cette valeur prédéterminée d'un paramètre de reconnaissance vocale est ensuite comparée avec une valeur du même paramètre de reconnaissance vocale pour l'élément 113 du résultat 100 dont la validité est recherchée. Si ces deux valeurs sont suffisamment proches, ce qui veut dire par exemple qu'elles présentent une différence absolue inférieure à 10% de la valeur prédéterminée du paramètre de reconnaissance vocale, l'élément 113 est déterminé valide. Pour l'implémentation de cette variante préférée, la méthode de l'invention comprend de préférence une étape préliminaire de reconnaissance vocale d'un message 50 de calibration dit par plusieurs orateurs 40 et comprenant plusieurs éléments parlés. Par exemple, un message 50 de calibration comprend les éléments parlés suivants : zéro, un, deux, trois, quatre, cinq, six, sept, huit, neuf, dix.

Les inventeurs proposent aussi une méthode de post-traitement d'un résultat 100 de reconnaissance vocale. Pour cette méthode de post-traitement, l'entrée correspond à un résultat 100 issu de la sortie d'un moteur de reconnaissance vocale 10.

La première étape de cette méthode de post-traitement, l'étape i., consiste à recevoir le résultat 100. Ensuite, de préférence en partant de la fin 112 du résultat 100, la méthode va isoler un premier élément 113. Selon cette variante préférée, la méthode de post-traitement va donc d'abord isoler le dernier élément 113 du résultat 100 le long de l'échelle de temps, t. Une fois cet élément 113 choisi, la méthode détermine s'il est valide en utilisant un test de validation. Le test de validation peut comprendre plusieurs méthodes, plusieurs tests ou plusieurs étapes. Il comprendra en tout cas au moins une méthode telle que décrite ci-dessus pour déterminer si un élément en valide 113 qui utilise un profil de l'orateur 40 ayant dit un message 50 dont est issu le résultat 100. D'autres méthodes peuvent être combinées à cette méthode lors du test de validation.

Ensuite, un deuxième élément 113 en partant de la fin 112 est considéré et ainsi de suite. Selon une version possible de la méthode de post-traitement, on parcourt ainsi tous les éléments 113 du résultat 100 le long de la flèche montrée en haut de la figure 2 et on s'arrête quand le premier élément 113 le long de l'échelle de temps, t, a été déterminé valide ou pas. Selon une autre variante préférée, on arrête de parcourir les éléments 113 du résultat 100 le long de la flèche en haut de la figure 2 dès qu'on a détecté qu'un élément 113 n'était pas valide. On détermine ensuite une solution post-traitée 200 en reprenant des éléments 113 qui ont été déterminés valides, de préférence, en utilisant tous les éléments 113 qui ont été déterminés valides. Lors de la détermination de la solution post-traitée 200, il faut garder le bon ordre des différents éléments 113 sélectionnés le long d'une échelle temporelle, t. Ainsi, il faut tenir compte que le premier élément 113 traité par la méthode de post-traitement représente, pour certaines versions préférées, le dernier élément 113 du message 100 et donc qu'il doit se retrouver en dernier dans la solution post-traitée 200 s'il a été déterminé comme valide. En général, un moteur de reconnaissance vocale 10 fournit, avec les différents éléments 113 du message 100, des informations temporelles associées, par exemple le début et la fin de chaque élément 113. Ces informations temporelles associées peuvent être utilisées pour classer dans le bon ordre les éléments 113 déterminés valides à l'étape iii.a., c'est-à-dire dans un ordre chronologique croissant.

De préférence, la méthode de post-traitement comprend une étape de vérifier que la solution post-traitée 200 satisfait une règle de grammaire. Un exemple de règle de grammaire est un nombre de mots. Si la solution post-traitée 200 ne satisfait pas une telle règle de grammaire, il peut être décidé de ne pas la fournir. Dans ce cas, il est parfois préféré de fournir le résultat 100 du moteur de reconnaissance vocale 10. Si la solution post-traitée 200 satisfait une telle règle de grammaire, on préférera alors la fournir.

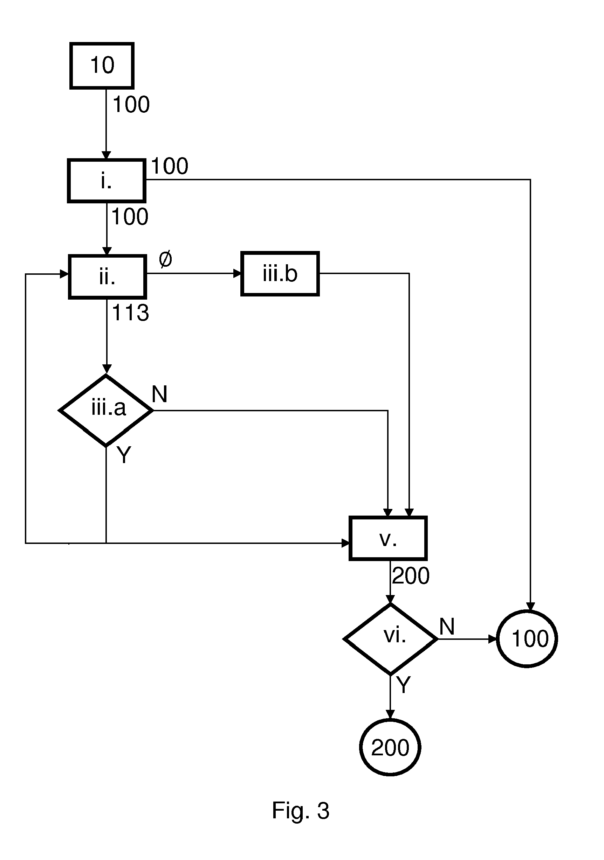

La figure 3 présente sous forme schématique une version préférée de la méthode de post-traitement où :

- on s'arrête d'isoler (ou choisir) un élément 113 additionnel pour lui faire subir le test de validation quand on a détecté un élément 113 non valide, où
- on vérifie que la solution post-traitée 200 satisfait une règle de grammaire (étape vii.), où
- on fournit la solution post-traitée 200 si elle satisfait ladite règle de grammaire, et où
- on fournit le résultat 100 du moteur de reconnaissance vocale 10 si la solution post-traitée 200 ne satisfait pas ladite règle de grammaire.

L'étape iii.a consiste à déterminer si un élément 113 sélectionné à l'étape ii. est valide en utilisant un test de validation. Outre la méthode de détermination de validité d'un élément 113 selon le premier aspect de l'invention, le test de validation peut comprendre d'autres étapes en combinaison.

Un élément 113 est caractérisé par un début et une fin. Il a donc une certaine durée 150. Selon une variante possible, le test de validation comprend une étape de considérer un élément 113 valide si sa durée 150 est supérieure ou égale à un seuil de durée inférieur. Le seuil de durée inférieur est par exemple compris entre 50 et 160 millisecondes. De préférence, le seuil de durée inférieur vaut 120 millisecondes. Le seuil de durée inférieur peut être adapté dynamiquement. Selon une autre variante possible, le test de validation comprend une étape de considérer un élément 113 valide si sa durée 150 est inférieure ou égale à un seuil de durée supérieur. Le seuil de durée supérieur est par exemple compris entre 400 et 800 millisecondes. De préférence, le seuil de durée supérieur vaut 600 millisecondes. Le seuil de durée supérieur peut être adapté dynamiquement. De préférence, le seuil de durée inférieur et/ou le seuil de durée supérieur est/sont déterminé(s) par une grammaire.

En général, un taux de confiance 160 est associé à chaque élément 113. Selon une autre variante possible, le test de validation comprend une étape de considérer un élément 113 valide si son taux de confiance 160 est supérieur ou égal à un taux de confiance minimal 161. De préférence, ce taux de confiance minimal 161 peut varier dynamiquement. Dans un tel cas, il est alors possible que le taux de confiance minimal 161 utilisé pour déterminer si un élément 113 est valide soit différent de celui utilisé pour déterminer si un autre élément 113 est valide ou pas. Les inventeurs ont trouvé qu'un taux de confiance minimal 161 compris entre 3500 et 5000 fournissaient de bons résultats, une valeur encore préférée étant 4000 (valeurs pour le modèle VoCon® 3200 V3.14 de Nuance mais qui peuvent être adaptées à d'autres modèles de moteurs de reconnaissance vocale 10).

Selon une autre variante possible, le test de validation comprend une étape de considérer un élément 113 valide si un intervalle temporel 170 le séparant d'un autre élément 113 directement adjacent vers la fin 112 du résultat 100 est supérieur ou égal à un intervalle de temps minimum. Un tel intervalle de temps minimum est par exemple compris entre zéro et cinquante millisecondes. Selon une autre variante possible, le test de validation comprend une étape de considérer un élément 113 valide si un intervalle temporel 170 le séparant d'un autre élément 113 directement adjacent vers la fin 112 du résultat 100 est inférieur ou égal à un intervalle de temps maximum. Un tel intervalle de temps maximum est par exemple compris entre 300 et 600 millisecondes et une valeur préférée est 400 ms. Pour ces deux exemples de test de validation, on considère donc l'intervalle de temps 170 qui sépare un élément 113 de son voisin direct vers la droite sur la figure 2. En d'autres termes, on regarde l'intervalle de temps qui sépare un élément 113 de son voisin de droite direct, c'est-à-dire son voisin postérieur le long de l'échelle de temps, t. Un intervalle de temps séparant deux éléments 113 est par exemple un intervalle de temps pendant lequel un moteur de reconnaissance vocale 10 ne reconnait pas d'élément 113, par exemple pas de mot.

Les inventeurs proposent aussi une méthode pour générer une solution optimisée en reconnaissance vocale et comprenant les étapes suivantes :

- recevoir une pluralité de résultats 100 de reconnaissance vocale, chacun comprenant un ou plusieurs éléments 113 ;
- sélectionner un ou plusieurs éléments 113 valides d'un ou plusieurs résultats 100 de ladite pluralité de résultats 100,
- générer ladite solution optimisée à partir de l'au moins un élément 113 valide sélectionné à l'étape précédente.

L'au moins un élément 113 valide est déterminé comme tel grâce à la méthode selon le premier aspect de l'invention.

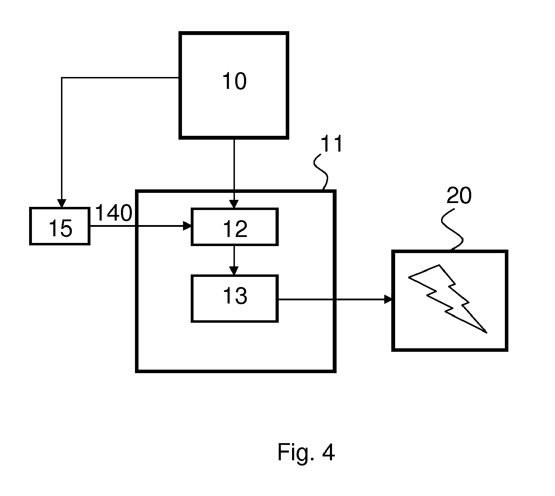

Selon un deuxième aspect, l'invention se rapporte à un système 11 (ou dispositif) de détermination de validité d'un élément 113 d'un résultat 100 de reconnaissance vocale. La figure 4 illustre schématiquement un tel système 11 en combinaison avec un moteur de reconnaissance vocale 10, un dispositif auxiliaire 15 et un écran 20. Sur cette figure, le système 11 et le moteur de reconnaissance vocale 10 sont deux dispositifs séparés. Selon une autre version possible, le système 11 est intégré dans un moteur de reconnaissance vocale 10 de sorte qu'il ne soit pas possible de les différencier. Dans un tel cas, un moteur de reconnaissance vocale 10 classique est modifié ou adapté pour pouvoir réaliser les fonctions du système 11 décrites ci-dessous. Le dispositif auxiliaire 15 permet de fournir une (ou plusieurs) valeur prédéterminée d'un (ou plusieurs) paramètre de reconnaissance vocale pour un élément 113 et pour un orateur 40. A la figure 4, ce dispositif auxiliaire 15 est séparé du système 11. Selon une autre version possible, le dispositif auxiliaire est un module qui est intégré au niveau du système 11 de sorte qu'il ne soit pas possible de les différencier. Il pourrait être également prévu que le module auxiliaire 15 soit intégré au niveau du moteur de reconnaissance vocale 10. De préférence, le module auxiliaire 15 est apte à communiquer avec le moteur de reconnaissance vocale 10.

Des exemples de système 11 sont : un ordinateur, un moteur de reconnaissance vocale 10 adapté ou programmé pour pouvoir réaliser une méthode selon le premier aspect de l'invention, un module matériel (ou hardware) d'un moteur de reconnaissance vocale 10, un module matériel apte à communiquer avec un moteur de reconnaissance vocale 10. D'autres exemples sont néanmoins possibles. Le système 11 comprend des moyens d'acquisition 12 pour recevoir une valeur 140 d'un paramètre de reconnaissance vocale, qui est prédéterminée pour ledit orateur 40 et pour un élément 13 qui est identique audit élément 113 dudit résultat 100 de reconnaissance vocale dont la validité est recherchée. Les moyens d'acquisition 12 sont également aptes à recevoir une valeur du même paramètre de reconnaissance vocale pour l'élément 113 dudit résultat 100 de reconnaissance vocale dont la validité est recherchée. En général, cette valeur est fournie par le moteur de reconnaissance vocale 10. Des exemples de moyens d'acquisition 12 sont : un port d'entrée du système de post-traitement 11, par exemple un port USB, un port Ethernet, un port sans fil (par exemple WIFI). D'autres exemples de moyens d'acquisition 12 sont néanmoins possibles.

Le système 11 comprend en outre des moyens de traitement 13 pour déterminer qu'un élément 113 d'un résultat 100 de reconnaissance vocale est valide si la valeur d'un de ses paramètre de reconnaissance vocales correspond, dans un intervalle près, à la valeur prédéterminée 140 fournie par le dispositif auxiliaire 15, qui est par exemple un module mémoire. De préférence, le système 11 est apte à envoyer le résultat de la détermination de validité de l'élément 113 vers un écran 20 pour l'afficher.

Des exemples de moyens de traitement 13 sont: une unité de contrôle, un processeur ou unité centrale de traitement, un contrôleur, une puce, une micro-puce, un circuit intégré, un processeur multi-coeurs. D'autres exemples connus d'un homme du métier sont néanmoins possibles.

De préférence, le système 11 est également apte à réaliser une méthode de post-traitement d'un résultat 100 de reconnaissance vocale telle que décrite ci-dessus. Dans ce cas, les moyens d'acquisition 12 sont de préférence aptes à recevoir un résultat 100 de reconnaissance vocale et les moyens de traitement 13 sont de préférence aptes à lui appliquer une telle méthode de post-traitement.

Selon un troisième aspect, l'invention se rapporte à un programme, de préférence un programme d'ordinateur. De préférence, ce programme fait partie d'une interface vocale homme-machine.

Selon un quatrième aspect, l'invention se rapporte à un support de stockage pouvant être connecté à un dispositif, par exemple un ordinateur pouvant communiquer avec un moteur de reconnaissance vocale 10. Selon une autre variante possible, ce dispositif est un moteur de reconnaissance vocale 10. Des exemples de support de stockage selon l'invention sont : une clé USB, un disque dur externe, un disque de type CD-ROM. D'autres exemples sont néanmoins possibles.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Méthode de détermination de validité d'un élément 113 d'un résultat 100 de reconnaissance vocale comprenant les étapes suivantes : fournir une valeur d'un paramètre de reconnaissance vocale, qui est prédéterminée pour l'orateur 40 et pour un élément 113 identique audit élément 113 dudit résultat 100 dont la validité est recherchée ; obtenir à partir dudit résultat 100 une valeur du même paramètre de reconnaissance vocale pour ledit élément 113 dont la validité est recherchée ; déterminer que ledit élément 113 dudit résultat 100 est valide si la valeur du paramètre de reconnaissance vocale obtenue à partir dudit résultat 100 est identique, dans un intervalle près, à la valeur prédéterminée pour ledit orateur 40 pour cet élément 113.

## Revendications

1. Méthode de détermination de validité d'un élément (113) d'un résultat (100) de reconnaissance vocale, ledit résultat (100) étant généré par un algorithme de reconnaissance vocale appliqué à un message (50) dit par un orateur (40), ladite méthode comprenant les étapes suivantes :

   a) obtenir une valeur d'un paramètre de reconnaissance vocale, qui est prédéterminée :

- pour ledit orateur (40), et
- pour un élément (113) qui est identique audit élément (113) dudit résultat (100) dont la validité est recherchée;

b) obtenir une valeur du même paramètre de reconnaissance vocale que celui de l'étape a) pour ledit élément (113) dudit résultat (100) de reconnaissance vocale dont la validité est recherchée;

c) comparer les valeurs obtenues aux étapes a) et b) pour déterminer la validité dudit élément (113) dudit résultat (100) de reconnaissance vocale.

2.   Méthode selon la revendication précédente, **caractérisée en ce qu'**elle comprend en outre une étape préliminaire de reconnaissance vocale d'un message (50) de calibration dit par ledit orateur (40), ledit message (50) de calibration comprenant un élément parlé identique audit élément (113) dudit résultat (100) de reconnaissance vocale dont la validité est recherchée.

3.   Méthode selon l'une quelconque des revendications précédentes, **caractérisée en ce que** l'étape c) comprend l'étape c)1) suivante : si la valeur du paramètre de reconnaissance vocale obtenue à l'étape b) correspond, dans un intervalle près, à la valeur prédéterminée du paramètre de reconnaissance vocale obtenue à l'étape a), déterminer que ledit élément (113) dudit résultat (100) de reconnaissance vocale est valide.

4.   Méthode selon l'une quelconque des revendications précédentes **caractérisée en ce que** ledit paramètre de reconnaissance vocale de l'étape a) est un taux de confiance.

5.   Méthode selon l'une quelconque des revendications précédentes **caractérisée en ce que** ledit paramètre de reconnaissance vocale de l'étape a) est une durée.

6.   Méthode selon l'une quelconque des revendications précédentes **caractérisée en ce que** :

- la méthode comprend en outre une étape de fournir, pour un élément (113) qui est identique audit élément (113) dudit résultat (100) et pour différents orateurs (40) dont ledit orateur (40) dudit message (50), différentes valeurs prédéterminées du même paramètre de reconnaissance vocale que celui de l'étape a), chacune desdites différentes valeurs prédéterminées étant associée à chacun desdits orateurs (40) ; et **en ce que**
- la méthode comprend en outre une étape de sélectionner parmi lesdites différentes valeurs prédéterminées dudit paramètre de reconnaissance vocale l'une d'entre elle correspondant à l'orateur (40) dudit message (50), pour obtenir ladite valeur prédéterminée de l'étape a).

7.   Méthode selon l'une quelconque des revendications 1 à 5 **caractérisée en ce que** :

- la méthode comprend en outre une étape de fournir, pour ledit orateur (40) et pour différents éléments (113) dont ledit élément (113) dont la validité est recherchée, différentes valeurs prédéterminées du même paramètre de reconnaissance vocale que celui de l'étape a), chacune desdites différentes valeurs prédéterminées étant associée à chacun desdits différents éléments (113) ; et **en ce que**
- la méthode de l'invention comprend en outre une étape de sélectionner parmi lesdites différentes valeurs prédéterminées dudit paramètre de reconnaissance vocale l'une d'entre elle correspondant à un élément (113) qui est identique audit l'élément (113) dudit résultat (100) de reconnaissance vocale, pour obtenir ladite valeur prédéterminée de l'étape a).

8.   Méthode selon l'une quelconque des revendications 1 à 5 **caractérisée en ce que** :

- la méthode comprend en outre une étape de fournir, pour différents orateurs (40) dont ledit orateur (40) dudit message (50) et pour différents éléments (113) dont ledit élément (113) dont la validité est recherchée, différentes valeurs prédéterminées du même paramètre de reconnaissance vocale que celui de l'étape a), chacune desdites différentes valeurs prédéterminées étant associée à un seul desdits différents orateurs (40) et à un seul desdits différents éléments (113) ; et **en ce que**
- la méthode de l'invention comprend en outre une étape de sélectionner parmi lesdites différentes valeurs prédéterminées dudit paramètre de reconnaissance vocale l'une d'entre elle correspondant à l'orateur (40) dudit message (50) et à un élément (113) qui est identique audit l'élément (113) dudit résultat (100) de reconnaissance vocale, pour obtenir ladite valeur prédéterminée de l'étape a).

**9.** Méthode de post-traitement d'un résultat (100) de reconnaissance vocale, ledit résultat (100) comprenant un début (111), une fin (112) et une pluralité d'éléments (113) répartis entre ledit début (111) et ladite fin (112), ladite méthode de post-traitement comprenant les étapes suivantes :

> i. recevoir ledit résultat (100) ;
> ii. isoler un élément (113) de ladite pluralité d'éléments (113) qui n'a pas subi le test de validation de l'étape iii.a. ;
> iii. ensuite,
>
>> a. si un élément (113) a été isolé à l'étape ii., déterminer s'il est valide en utilisant un test de validation,
>> b. sinon, passer directement à l'étape v. ;
>
> iv. répéter les étapes ii. et iii.;
> v. si au moins un élément (113) a été déterminé valide à l'étape iii.a, déterminer une solution post-traitée (200) en utilisant au moins un élément (113) déterminé valide à l'étape iii.a ;

> **caractérisée en ce que** ledit test de validation de l'étape iii.a., pour déterminer si l'élément (113) isolé à l'étape ii. est valide, comprend une méthode selon l'une quelconque des revendications précédentes.

**10.** Méthode de post-traitement d'un résultat (100) de reconnaissance vocale selon la revendication précédente **caractérisée en ce que** chaque élément (113) isolé à l'étape ii. est choisi de ladite fin (112) du résultat (100) audit début (111) du résultat (100) de manière consécutive.

**11.** Méthode de post-traitement d'un résultat (100) de reconnaissance vocale selon l'une quelconque des revendications 9 à 10 **caractérisée en ce que** ledit test de validation de l'étape iii.a. comprend une étape de considérer un élément (113) valide si sa durée est supérieure ou égale à un seuil de durée inférieur.

**12.** Méthode de post-traitement d'un résultat (100) de reconnaissance vocale selon l'une quelconque des revendications 9 à 11 **caractérisée en ce que** ledit test de validation de l'étape iii.a. comprend une étape de considérer un élément (113) valide si son taux de confiance (160) est supérieur ou égal à un taux de confiance minimal (161).

**13.** Méthode pour générer une solution optimisée en reconnaissance vocale et comprenant les étapes suivantes :

> - recevoir une pluralité de résultats (100) de reconnaissance vocale, chacun comprenant un ou plusieurs éléments (113) ;
> - sélectionner un ou plusieurs éléments (113) valides d'un ou plusieurs résultats (100) de ladite pluralité de résultats (100), lesdits un ou plusieurs éléments (113) étant déterminés valides grâce à l'une quelconque des revendications 1 à 8 ;
> - générer ladite solution optimisée à partir de l'au moins un élément (113) valide sélectionné à l'étape précédente.

**14.** Système (11) de détermination de validité d'un élément (113) d'un résultat (100) de reconnaissance vocale, ledit résultat (100) étant issu d'un algorithme de reconnaissance vocale appliqué à un message (50) dit par un orateur (40), ledit système (11) comprenant:

> - des moyens d'acquisition (12) pour recevoir une valeur d'un paramètre de reconnaissance vocale, qui est prédéterminée pour ledit orateur (40) et pour un élément (13) qui est identique audit élément (113) dudit résultat (100) de reconnaissance vocale dont la validité est recherchée ;
> - des moyens d'acquisition (12) pour recevoir une valeur du même paramètre de reconnaissance vocale pour l'élément (113) dudit résultat (100) de reconnaissance vocale dont la validité est recherchée ;
> - des moyens de traitement (13) pour comparer les valeurs reçues par les moyens d'acquisition (12) pour déterminer la validité dudit élément (113) dudit résultat (100) de reconnaissance vocale.

**15.** Programme pour permettre de déterminer la validité d'un élément (113) d'un résultat (100) de reconnaissance vocale, ledit résultat (100) étant issu d'un algorithme de reconnaissance vocale appliqué à un message (50) dit par un orateur (40), ledit programme comprenant un code pour permettre à un dispositif d'effectuer les étapes suivantes :

> a) lire une valeur d'un paramètre de reconnaissance vocale qui est prédéterminée pour ledit orateur (40) et pour un élément (113) qui est identique audit élément (113) dudit résultat (100) de reconnaissance vocale;
> b) lire une valeur du même paramètre de reconnaissance vocale que celui de l'étape a) pour ledit élément (113) dudit résultat (100) de reconnaissance vocale;

c) comparer les valeurs obtenues aux étapes a) et b) pour déterminer la validité dudit élément (113) dudit résultat (100) de reconnaissance vocale.

Fig. 1

Fig. 2

Fig. 3

Fig. 4

Europäisches
Patentamt

European
Patent Office

Office européen
des brevets

# RAPPORT DE RECHERCHE EUROPEENNE

Numéro de la demande

EP 15 15 7920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 8 874 438 B2 (SCHROER ANDREAS [DE] ET AL) 28 octobre 2014 (2014-10-28) <br> * colonne 2, ligne 48 - ligne 59 * <br> * colonne 4, ligne 3 - ligne 49; figures 1,2 * <br> ----- | 1-4,6-8, 13-15 | INV. <br> G10L15/22 |
| X | EP 1 067 512 A1 (SONY INT EUROPE GMBH [DE]) 10 janvier 2001 (2001-01-10) <br> * alinéa [0025] - alinéa [0027] * <br> * alinéa [0059]; figure 1 * <br> * alinéa [0060] - alinéa [0063]; figure 2 * <br> * alinéa [0064] - alinéa [0068]; figure 3 * <br> ----- | 1,5,6, 8-15 | |
| A | US 2007/050190 A1 (WASHIO NOBUYUKI [JP] ET AL) 1 mars 2007 (2007-03-01) <br> * alinéa [0073] * <br> ----- | 10 | |
| A | US 2002/133346 A1 (KEMBLE KIMBERLEE A [US] ET AL) 19 septembre 2002 (2002-09-19) <br> * le document en entier * <br> ----- | 13 | DOMAINES TECHNIQUES RECHERCHES (IPC) |
| A | US 2012/209609 A1 (ZHAO XUFANG [CA] ET AL) 16 août 2012 (2012-08-16) <br> * alinéa [0052] * <br> * alinéa [0062] * <br> ----- | 1,14,15 | G10L |

Le présent rapport a été établi pour toutes les revendications

| Lieu de la recherche | Date d'achèvement de la recherche | Examinateur |
|---|---|---|
| La Haye | 31 août 2015 | De Meuleneire, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                 

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 15 7920

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2015

| Document brevet cité au rapport de recherche | | Date de publication | Membre(s) de la famille de brevet(s) | | Date de publication |
|---|---|---|---|---|---|
| US 8874438 | B2 | 28-10-2014 | EP | 1723636 A1 | 22-11-2006 |
| | | | US | 2007213978 A1 | 13-09-2007 |
| | | | WO | 2005088607 A1 | 22-09-2005 |
| EP 1067512 | A1 | 10-01-2001 | DE | 69937823 T2 | 24-12-2008 |
| | | | EP | 1067512 A1 | 10-01-2001 |
| US 2007050190 | A1 | 01-03-2007 | CN | 1920948 A | 28-02-2007 |
| | | | JP | 2007057844 A | 08-03-2007 |
| | | | US | 2007050190 A1 | 01-03-2007 |
| US 2002133346 | A1 | 19-09-2002 | AUCUN | | |
| US 2012209609 | A1 | 16-08-2012 | AUCUN | | |

EPO FORM P0460

Pour tout renseignement concernant cette annexe : voir Journal Officiel de l'Office européen des brevets, No.12/82

**EP 3 065 132 A1**

## RÉFÉRENCES CITÉES DANS LA DESCRIPTION

**Documents brevets cités dans la description**

- US 6754629 B1
- US 20140278418 A1